# EUROPEAN PATENT SPECIFICATION

(11) **EP 3 409 097 B1**
(45) Date of publication and mention of the grant of the patent: **22.07.2020**
(21) Application number: 18163845.3
(22) Date of filing: 26.03.2018
(51) Int. Cl.: A01D 43/073, A01D 43/08, A01D 75/18, A01D 75/20

(54) **AGRICULTURAL WORKING MACHINE**
LANDWIRTSCHAFTLICHE ARBEITSMASCHINE
MACHINE DE TRAVAIL AGRICOLE

(30) Priority: 02.06.2017 DE 102017112250
(43) Date of publication of application: 05.12.2018
(73) Proprietor: CLAAS E-Systems GmbH, 49201 Dissen am Teutoburger Wald (DE)
(72) Inventor: Lisouski, Pavel, 2720 Vanlose (DK); Vilander, Jesper, 3480 F Fredensborg (DK); Terlutter, Michael, 33442 Clarholz (DE); Gerdhenrichs, Michael, 33378 Rheda-Wiedenbrück (DE); Brandt, Jan-Hendryk, 32051 Herford (DE); Speckamp, Dirk, 59073 Hamm (DE)
(74) Representative: Budach, Steffen

(56) References cited:
- EP-A1- 1 731 983
- WO-A1-2015/177188
- US-A- 6 097 425
- US-A1- 2012 262 568
- US-B1- 6 389 785

## Description

The invention is directed to an agricultural working machine according to the general part of claim 1.

The agricultural working machine in question comprises a machine body and a discharge spout attached to the machine body, the discharge spout being used for overloading crop via a crop stream from the agricultural working machine to a transport vehicle, e.g. a trailer.

In an agricultural working machine according to the prior art (EP 2 020 174 B1) a camera arrangement is provided comprising a camera attached to the discharge spout. The camera arrangement is used for generating image data of a section of environment of the discharge spout captured by the camera. During a harvesting operation, while overloading crop to the transport vehicle, the camera namely captures the container of the transport vehicle for receiving the crop particles, wherein the correspondingly generated image data is used to generate drive commands of an electronic spout control for guiding the crop stream to a target hit point at the container.

US 2012/0262568 A1 discloses the activation of a camera when the reverse gear is selected, in order to provide the driver with images of the rear region.

EP1731983A1 discloses a camera to detect obstacles.

The problem of agricultural working machines of the type described above, in for example of combine or forage harvesters, is that due to their large dimensions it is difficult for the driver to oversee the area directly around the agricultural working machine and especially the shunting range. Accordingly, there is a certain risk that an agricultural working machine inadvertently collides with an obstacle and/or a person.

It is therefore an object of the present invention to improve the known agricultural working machine such that the risk of a collision with an obstacle and/or a person is reduced.

The above noted object is solved for an agricultural working machine according to the general part of claim 1 by the features of the characterizing part of claim 1.

As a basis for the invention it has been found that the camera, which is already attached to the discharge spout for controlling the guidance of the crop stream into the container of the transport vehicle, can also be used to detect an obstacle and/or a person behind the agricultural working machine, in particular in the shunting range of the agricultural working machine. For this the camera has to be activated and oriented such that it captures the respective area, that is the ground behind the agricultural working machine, in the respective situation, in particular while reversing the agricultural working machine. Accordingly, the risk of a collision with an obstacle and/or a person can be reduced.

According to claim 1 the discharge spout with the described camera is movable, in particular in the vertical plane, between a lower position and a lifted position. The lower position is in particular the lower most position of the discharge spout which is also the regular position when the discharge spout is not in use, e.g. when the agricultural working machine is parked or driven on streets. The lifted position is in particular vertically above said lowered position or lower most position and is in particular the upper most position. In both positions and in particular also in intermediate positions between both positions the camera is directed in a direction parallel to the driving direction, wherein in the lowered position the camera captures a first section of the ground behind the agricultural working machine and in the lifted position the camera captures a second section of the ground behind the agricultural working machine. The first section is in particular closer to the rear of the agricultural working machine than the second section (claim 2).

Accordingly, when the discharge spout is moved up or down, the camera, which in particular is fixedly attached to the discharge spout, is moved correspondingly. Preferably, when capturing the first section, the camera can detect objects with a height (vertical height above the ground) of at least 0,40 m, preferably of at least 0,30 m, more preferably of at least 0,20 m, and in the second section the camera can preferably detect objects with a height of at least 0,70 m, preferably of at least 0,60 m, more preferably of at least 0,50 m (claim 3).

According to claim 4 the camera is automatically activated when the agricultural working machine is reversing. The reversing movement may be during a harvesting operation and/or a non-harvesting operation.

According to claim 5 the camera is a 3D camera. Such a camera makes it possible to compute a 3D point cloud that makes it easy to recognize the respective objects (obstacle and/or person) on the ground.

Claim 6 defines that the camera arrangement can also generate image data to be used for controlling the guidance of the crop stream to the transport vehicle, in particular to the container for receiving the crop particles.

According to claims 7 and 8 the agricultural working machine may also comprise further components suitable for detection of an obstacle and/or a person in front of and/or behind and/or at the side of the agricultural working machine and/or an implement of the agricultural working machine. For example, a further camera arrangement may be provided, which is regularly used for detecting a swath in front of the agricultural working machine, but which is also configured to detect an obstacle and/or a person appearing in front of (in the forward driving direction of) the agricultural working machine (claim 7). It is also conceivable to provide one or more further (separate) 2D or 3D sensors, e.g. one or more ultrasonic sensors and/or laser sensors and/or radar sensors for detecting an obstacle and/or person (claim 8).

According to claim 9 an operator assistance system is provided which generates a warning signal, in particular an acoustical and/or optical warning signal, when detecting an obstacle and/or a person. It is also conceivable that a display screen is provided, which is in particular part of the operator assistance system, to display a detected obstacle and/or person.

In the following a preferred embodiment of the invention will be described with reference to the drawings. In the drawings
- Fig. 1: shows in a) an agricultural working machine according to the invention with lowered discharge spout in a side view, and in b) the agricultural working machine with lowered discharge spout in a top view and
- Fig. 2: shows in a) the agricultural working machine of Fig. 1 with lifted discharge spout in a side view, and in b) the agricultural working machine with lifted discharge spout in a top view.

First of all it is pointed out that the proposed agricultural working machine 1 may be of various designs. For example, the proposed agricultural working machine 1 may be a combine or a forage harvester. While those agricultural working machines 1 are self-propellered machines, the invention may well be applicable to agricultural working machines 1 that are being pulled by a tractor or the like.

The agricultural working machine 1 comprises a machine body 2, a discharge spout 3 and a first camera arrangement 4. The discharge spout 3 is attached to the machine body 2 in such a way that it can be pivoted relative to the machine body 2 in a vertical and/or a horizontal direction.

The discharge spout 3 is designed for overloading crop from the agricultural working machine 1 to a transport vehicle (not shown), e.g. a trailer.

The camera arrangement 4 comprises a camera 5, in particular in 3D camera 5, which is fixedly attached to the discharge spout 3. In the particular case the camera 5 is mounted at the underside of the discharge spout 3 and is oriented in such a way that it captures a section 6 of environment of the discharge spout 3, which section 6 includes the part of the transport vehicle to which the crop stream is directed and in which the crop is filled when overloading crop from the agricultural working machine 1 to the transport vehicle. Accordingly, the camera arrangement 5 is configured to generate image data during a harvesting operation while overloading crop, based on which image data the guidance of the crop stream is controlled, for example by generating corresponding drive commands for an electronic spout control (not shown).

In addition the camera arrangement 4 of the proposed agricultural working machine 1 is configured to detect an obstacle 7 and/or a person 8 appearing on the ground behind the agricultural working machine 1. In other words, the camera 5 is oriented (or may be oriented by pivoting the discharge spout 3 up and down) such that the ground behind the agricultural working machine 1 is captured. In particular, the camera 5 captures the shunting range behind the agricultural working machine 1.

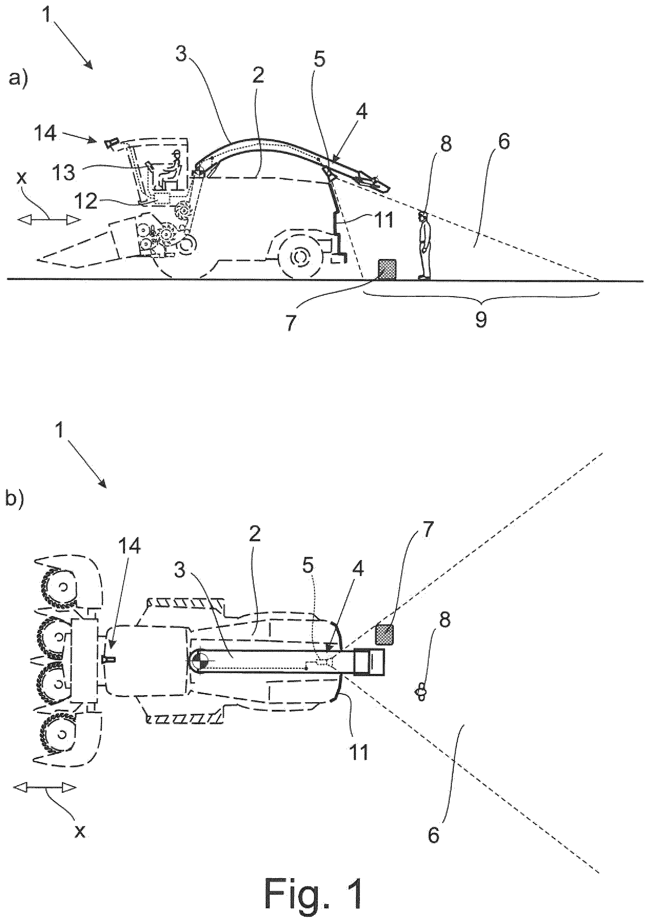

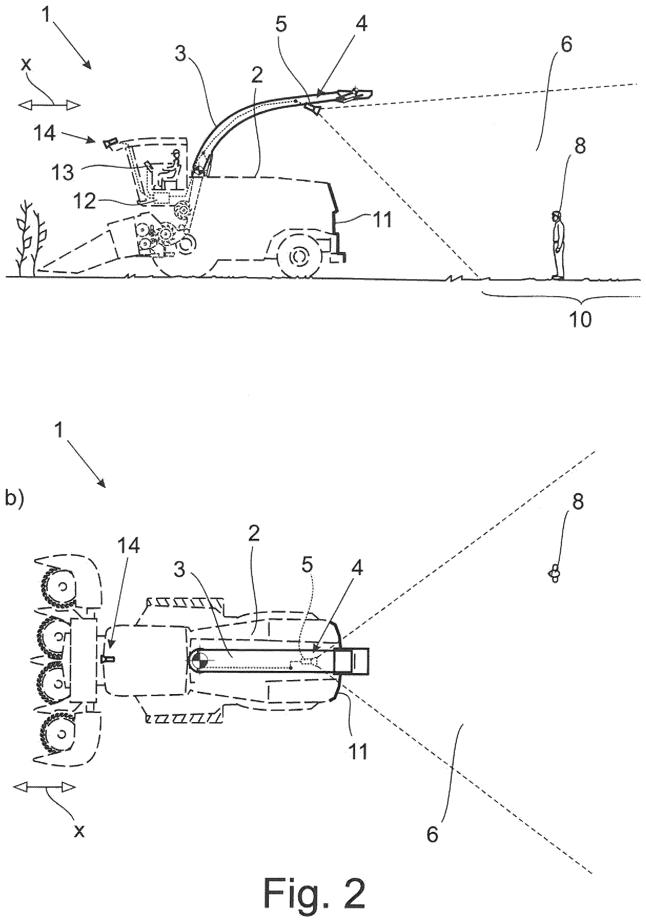

When comparing Figs. 1a) and 2a) with each other, it can be seen that the discharge spout 3 can be moved, here especially in a vertical plane, between a lowered position (Fig. 1) and a lifted position (Fig. 2). Preferably the lowered position is the lower most position of the discharge spout 3 in which the discharge spout 3 is also positioned when not in use, for example while the agricultural working machine 1 is parked or driving on streets.

Figs. 1a) and b) as well as Figs. 2a) and b) show that in both positions of the discharge spout 3 the camera 5 is directed in a direction parallel to the respective driving direction X (forward or backward driving direction). Thereby, the camera 5 captures, when the discharge spout 3 is in the lowered position (Fig. 1a)), a first section 9 of the ground behind the agricultural working machine 1. In the lifted position (Fig. 2a)) of the discharge spout 3 the camera 5 captures a second section 10 of the ground behind the agricultural working machine 1. The first section 9 is in this case closer to the rear 11 of the agricultural working machine 1 than the second section 11. Moreover, in this case the first section 9 overlaps the second section 10.

Moreover, the camera arrangement 4 is configured such that in the first section 9 captured by the camera 5 objects, that is obstacles 7 and/or persons 8, with a height of 0,20 m and more and in the second section 10 objects 7, 8 with a height of 0,50 m or more can be detected.

In case when such an object 7, 8 is detected, an operator assistance system 12 of the agricultural working machine 1 generates an acoustical and/or optical warning signal. Additionally or alternatively the operator assistance system 12 is configured to display the detected object 7, 8 on a display screen 13 of the operator assistance system 12.

Thereby the operator (driver) of the agricultural working machine 1 can react easily and quick which reduces the risk of a collision with the respective obstacle 7 or person 8.

According to a further embodiment of the agricultural working machine 1, the camera 5 of the first camera arrangement 4 is automatically activated when the agricultural working machine 1 is reversing during a harvesting operation and/or during a non-harvesting operation. Preferably the camera 5 is activated as soon as the operator selects a reversing gear of the agricultural working machine 1.

In addition to the above described first camera arrangement 4, also further components may be provided, which also allow for a detection of obstacles 7 and/or persons 8 around the agricultural working machine 1, in particular in the close range and/or shunting range of the agricultural working machine 1. For example the agricultural working machine 1 comprises a second camera arrangement 14 for detecting a swath (not shown), in particular in front of the agricultural working machine 1 and/or a camera arrangement for detecting crop rows, in particular in front of the agricultural working machine 1 and/or in front of an implement of the agricultural working machine 1, which camera arrangement(s) is/are furthermore configured to detect obstacles 7 and/or persons 8 appearing on the ground in front of and/or behind and/or at the side of the agricultural working machine 1 and/or an implement of the agricultural working machine 1.

Alternatively or additionally the agricultural working machine 1 may comprise a 2D or 3D sensor arrangement and/or an ultrasonic sensor arrangement and/or a laser sensor arrangement and/or a radar sensor arrangement or the like, which sensor arrangement(s) also allow(s) for a detection of a respective object appearing in front of and/or behind and/or at the side of the agricultural working machine 1 and/or an implement of the agricultural working machine 1.

### Reference Numbers

- 1: Agricultural working machine
- 2: Machine body
- 3: Discharge spout
- 4: First camera arrangement
- 5: Camera
- 6: Section of environment
- 7: Obstacle
- 8: Person
- 9: Frist section of ground
- 10: Second section of ground
- 11: Rear of agricultural working machine
- 12: Operator assistance system
- 13: Display screen
- 14: Second camera arrangement
- X: Forward or backward driving direction

## Claims

1. An agricultural working machine with a machine body (2), with a discharge spout (3) attached to the machine body (2) for overloading crop from the agricultural working machine (1) to a transport vehicle and with a camera arrangement (4) comprising a camera (5) attached to the discharge spout (3) for generating image data of a section (6) of environment of the discharge spout (3) captured by the camera (5),
wherein the camera arrangement (4) is configured to detect an obstacle (7) and/or a person (8) appearing on the ground behind the agricultural working machine (1), **characterized in that** the discharge spout (3) can be moved between a lowered position and a lifted position, wherein in both positions the camera (5) is directed in a direction parallel to the driving direction (X), wherein in the lowered position the camera (5) captures a first section (9) of the ground behind the agricultural working machine (1) and in the lifted position the camera (5) captures a second section (10) of the ground behind the agricultural working machine (1).

2. The agricultural working machine according to claim 1, **characterized in that** the first section (9) of the ground captured by the camera (5) is closer to the rear (11) of the agricultural working machine (1) than the second section (10) of the ground captured by the camera (5).

3. The agricultural working machine according to claim 1 or 2, **characterized in that** the camera arrangement (4) is configured such that in the first section (9) captured by the camera (5) an object (7, 8) with a height of at least 0,20 m and in the second section (10) captured by the camera (5) an object (7, 8) with a height of at least 0,50 m can be detected.

4. The agricultural working machine according to any one of the preceding claims, **characterized in that** the camera (5) is automatically activated when the agricultural working machine (1) is reversing during a harvesting operation and/or a non-harvesting operation.

5. The agricultural working machine according to any one of the preceding claims, **characterized in that** the camera (5) is a 3D camera.

6. The agricultural working machine according to any one of the preceding claims, **characterized in that** the camera arrangement (4) is furthermore configured to generate image data during a harvesting operation based on which the guidance of a crop stream is controlled during a process of overloading crop from the agricultural working machine (1) to a transport vehicle.

7. The agricultural working machine according to any one of the preceding claims, **characterized in that** the agricultural working machine (1) comprises a further camera arrangement (14) for detecting a swath in front of the agricultural working machine (1), which camera arrangement (14) is furthermore configured to detect an obstacle (7) and/or a person (8) appearing on the ground in front of the agricultural working machine (1).

8. The agricultural working machine according to any one of the preceding claims, **characterized in that** the agricultural working machine (1) furthermore comprises a 2D or 3D sensor arrangement and/or an ultrasonic sensor arrangement and/or a laser sensor arrangement and/or a radar sensor arrangement for detecting an obstacle (7) and/or a person (8) appearing in front of and/or behind and/or at the side of the agricultural working machine (1) and/or an implement of the agricultural working machine (1).

9. The agricultural working machine according to any one of the preceding claims, **characterized in that** the agricultural working machine (1) furthermore comprises an operator assistance system (12) configured to generate a warning signal when detecting an obstacle (7) and/or a person (8), and/or configured to display a detected obstacle (7) and/or person (8) on a display screen (13).

## Patentansprüche

1. Landwirtschaftliche Arbeitsmaschine mit einem Maschinenaufbau (2), wobei ein Ausgabestutzen (3) an dem Maschinenaufbau (2) angebracht ist, um Erntegut von der landwirtschaftlichen Arbeitsmaschine (1) auf ein Transportfahrzeug zu laden, und mit einer Kameraanordnung (4), die eine Kamera (5) umfasst, die zum Erzeugen von Bilddaten von einem Bereich (6) der Umgebung des Ausgabestutzens (3), der von der Kamera (5) erfasst wird, an dem Ausgabestutzen (3) angebracht ist,
wobei die Kameraanordnung (4) dazu konfiguriert ist, ein Hindernis (7) und/oder eine Person (8) zu detektieren, das bzw. die auf dem Boden hinter der landwirtschaftlichen Arbeitsmaschine (1) erscheint, **dadurch gekennzeichnet, dass** der Ausgabestutzen (3) zwischen einer abgesenkten Position und einer angehobenen Position bewegt werden kann, wobei die Kamera (5) in beiden Positionen in einer Richtung parallel zur Fahrtrichtung (X) ausgerichtet ist, wobei die Kamera (5) in der abgesenkten Position einen ersten Bereich (9) des Bodens hinter der landwirtschaftlichen Arbeitsmaschine (1) erfasst und die Kamera (5) in der angehobenen Position einen zweiten Bereich (10) des Bodens hinter der landwirtschaftlichen Arbeitsmaschine (1) erfasst.

2. Landwirtschaftliche Arbeitsmaschine nach Anspruch 1, **dadurch gekennzeichnet, dass** der von der Kamera (5) erfasste erste Bereich (9) des Bodens näher zur Hinterseite (11) der landwirtschaftlichen Arbeitsmaschine (1) ist als der von der Kamera (5) erfasste zweite Bereich (10) des Bodens.

3. Landwirtschaftliche Arbeitsmaschine nach Anspruch 1 oder 2, **dadurch gekennzeichnet, dass** die Kameraanordnung (4) so konfiguriert ist, dass in dem von der Kamera (5) erfassten ersten Bereich (9) ein Gegenstand (7, 8) mit einer Höhe von mindestens 0,20 m und in dem von der Kamera (5) erfassten zweiten Bereich (10) ein Gegenstand (7, 8) mit einer Höhe von mindestens 0,50 m detektiert werden kann.

4. Landwirtschaftliche Arbeitsmaschine nach einem der vorhergehenden Ansprüche, **dadurch gekennzeichnet, dass** die Kamera (5) automatisch aktiviert wird, wenn die landwirtschaftliche Arbeitsmaschine (1) während eines Erntevorgangs und/oder eines Nicht-Erntevorgangs rückwärts fährt.

5. Landwirtschaftliche Arbeitsmaschine nach einem der vorhergehenden Ansprüche, **dadurch gekennzeichnet, dass** es sich bei der Kamera (5) um eine 3D-Kamera handelt.

6. Landwirtschaftliche Arbeitsmaschine nach einem der vorhergehenden Ansprüche, **dadurch gekennzeichnet, dass** die Kameraanordnung (4) ferner dazu konfiguriert ist, während eines Erntevorgangs Bilddaten zu erzeugen, auf Basis derer das Führen eines Erntegutstroms während des Vorgangs des Ladens von Erntegut von der landwirtschaftlichen Arbeitsmaschine (1) auf ein Transportfahrzeug gesteuert wird.

7. Landwirtschaftliche Arbeitsmaschine nach einem der vorhergehenden Ansprüche, **dadurch gekennzeichnet, dass** die landwirtschaftliche Arbeitsmaschine (1) eine weitere Kameraanordnung (14) zum Detektieren einer Mähschwade vor der landwirtschaftlichen Arbeitsmaschine (1) umfasst, wobei die Kameraanordnung (14) ferner dazu konfiguriert ist, ein Hindernis (7) und/oder eine Person (8) zu detektieren, das bzw. die auf dem Boden vor der landwirtschaftlichen Arbeitsmaschine (1) erscheint.

8. Landwirtschaftliche Arbeitsmaschine nach einem der vorhergehenden Ansprüche, **dadurch gekennzeichnet, dass** die landwirtschaftliche Arbeitsmaschine (1) ferner eine 2D- oder 3D-Sensoranordnung und/oder eine Ultraschallanordnung und/oder eine Lasersensoranordnung und/oder eine Radarsensoranordnung zum Detektieren eines Hindernisses (7) und/oder einer Person (8), das bzw. die vor und/oder hinter und/oder neben der landwirtschaftlichen Arbeitsmaschine (1) und/oder einem Werkzeug der landwirtschaftlichen Arbeitsmaschine (1) erscheint, umfasst.

9. Landwirtschaftliche Arbeitsmaschine nach einem der vorhergehenden Ansprüche, **dadurch gekennzeichnet, dass** die landwirtschaftliche Arbeitsmaschine (1) ferner ein Anwenderassistenzsystem (12) umfasst, das dazu konfiguriert ist, ein Warnsignal zu erzeugen, wenn ein Hindernis (7) und/oder eine Person (8) detektiert wird, und/oder dazu konfiguriert ist, ein detektiertes Hindernis (7) und/oder eine detektierte Person (8) auf einem Anzeigebildschirm (13) anzuzeigen.

## Revendications

1. Une machine de travail agricole comprenant une carrosserie (2) avec une goulotte d'éjection (3) fixée à la carrosserie (2) pour transférer du produit récolté depuis la machine de travail agricole (1) vers un véhicule de transport, et comprenant un agencement de caméra (4) comprenant une caméra (5) fixée à la goulotte d'éjection (3) pour générer des données d'image d'une portion (6) de l'environnement de la goulotte d'éjection (3) couverte par la caméra (5), l'agencement de caméra (4) étant configuré pour détecter un obstacle (7) et/ou une personne (8) apparaissant au sol derrière la machine de travail agricole (1), **caractérisée en ce que** la goulotte d'éjection (3) peut être déplacée entre une position abaissée et une position levée, dans les deux positions la caméra (5) étant dirigée dans une direction parallèle au sens de la marche (X), dans la position abaissée la caméra (5) couvrant une première portion (9) du sol derrière la machine de travail agricole (1) et, dans la position levée, la caméra (5) couvrant une seconde portion (10) du sol derrière la machine de travail agricole (1).

2. La machine de travail agricole selon la revendication 1, **caractérisée en ce que** la première portion (9) du sol couverte par la caméra (5) est plus proche de l'arrière (11) de la machine de travail agricole (1) que la seconde portion (10) du sol couverte par la caméra (5).

3. La machine de travail agricole selon la revendication 1 ou 2, **caractérisée en ce que** l'agencement de caméra (4) est conçu de façon à pouvoir détecter, dans la première portion (9) couverte par la caméra (5), un objet (7, 8) d'une hauteur d'au moins 0,20 m et, dans la seconde portion (10) couverte par la caméra (5), un objet (7, 8) d'une hauteur d'au moins 0,50 m.

4. La machine de travail agricole selon l'une quelconque des revendications précédentes, **caractérisée en ce que** la caméra (5) est activée automatiquement lorsque la machine de travail agricole (1) recule lors d'une opération de récolte et/ou d'une opération de non récolte.

5. La machine de travail agricole selon l'une quelconque des revendications précédentes, **caractérisée en ce que** la caméra (5) est une caméra 3D.

6. La machine de travail agricole selon l'une quelconque des revendications précédentes, **caractérisée en ce que** l'agencement de caméra (4) est conçu, en outre, pour générer des données d'image durant une opération de récolte, sur la base desquelles le guidage du flux de produit récolté est commandé durant un processus de transfert de produit récolté depuis la machine de travail agricole (1) vers un véhicule de transport.

7. La machine de travail agricole selon l'une quelconque des revendications précédentes, **caractérisée en ce que** la machine de travail agricole (1) comprend un agencement de caméra supplémentaire (14) pour détecter un andain devant la machine de travail agricole (1), ledit agencement de caméra (14) étant conçu, en outre, pour détecter un obstacle (7) et/ou une personne (8) apparaissant au sol devant la machine de travail agricole (1).

8. La machine de travail agricole selon l'une quelconque des revendications précédentes, **caractérisée en ce que** la machine de travail agricole (1) comprend, en outre, un agencement de capteur 2D ou 3D et/ou un agencement de capteur ultrasonique et/ou un agencement de capteur à laser et/ou un agencement de capteur à radar pour détecter un obstacle (7) et/ou une personne (8) apparaissant devant et/ou derrière et/ou sur le côté de la machine de travail agricole (1) et/ou un outil de la machine de travail agricole (1).

9. La machine de travail agricole selon l'une quelconque des revendications précédentes, **caractérisée en ce que** la machine de travail agricole (1) comprend, en outre, un système d'assistance à l'opérateur (12) conçu pour générer un signal d'avertissement lorsqu'il détecte un obstacle (7) et/ou une personne (8), et/ou conçu pour afficher un obstacle (7) et/ou une personne (8) détectés sur un écran d'affichage (13).
